# EUROPÄISCHE PATENTSCHRIFT

(11) **EP 3 447 323 B1**
(45) Veröffentlichungstag und Bekanntmachung des Hinweises auf die Patenterteilung: **27.09.2023**
(21) Anmeldenummer: 18187464.5
(22) Anmeldetag: 06.08.2018
(51) Int. Cl.: F16D 13/74, F16D 25/063, F16D 25/0638, F16D 25/12

(54) **SCHALTKUPPLUNG FÜR EINE BAUMASCHINE**
CLUTCH FOR A CONSTRUCTION MACHINE
EMBRAYAGE POUR UN ENGIN DE CHANTIER

(30) Priorität: 25.08.2017 DE 102017214939
(43) Veröffentlichungstag der Anmeldung: 27.02.2019
(73) Patentinhaber: Wirtgen GmbH, 53578 Windhagen (DE)
(72) Erfinder: Krämer, Philipp, 53545 Linz (Rhein) (DE); von Schönebeck, Winfried, 53560 Kalenborn (DE); Barimani, Cyrus, 53639 Königswinter (DE)
(74) Vertreter: dompatent von Kreisler Selting Werner - Partnerschaft von Patent- und Rechtsanwälten mbB

(56) Entgegenhaltungen:
- EP-A1- 0 324 152
- EP-A1- 1 875 004
- EP-A2- 2 719 912
- DE-A1- 1 555 340
- DE-A1- 19 642 305
- FR-A- 1 196 177
- US-A- 3 823 802
- US-A- 5 009 118
- US-A- 5 495 927
- US-B1- 9 732 807

## Beschreibung

Die Erfindung betrifft eine Baumaschine mit einem Antriebsstrang, in dem eine Schaltkupplung angeordnet ist. nach dem Oberbegriff des Anspruchs 1.

Es sind Schaltkupplungen für Baumaschinen bekannt, die im Antriebsstrang einer Baumaschine angeordnet sind. Dabei ist die Schaltkupplung vorzugsweise im Antriebsstrang zwischen dem Antriebsmotor und einer Arbeitseinrichtung, vorzugsweise einer Arbeitswalze in der Baumaschine angeordnet. Die Schaltkupplung weist ein antriebsseitiges Ende und ein abtriebsseitiges Ende auf. Ferner weist die Schaltkupplung eine Abtriebswelle auf, wobei an dem antriebsseitigen Ende ein antriebsseitiges Lager an der Abtriebswelle angeordnet ist.

Üblicherweise wird dieses antriebsseitige Lager vor Einbau in die Baumaschine einmalig geschmiert. Am antriebsseitigen Ende ist die Schaltkupplung häufig direkt mit anderen Aggregaten des Antriebsstrangs verbunden. Aufgrund der Lage am antriebsseitigen Ende, ist es im eingebauten Zustand daher nur noch mit erheblichen Aufwand möglich, an dieses Lager zu gelangen und weitere Schmierungen vorzunehmen. Dies kann zu einem verfrühten Verschleiß führen.

Der Erfindung liegt daher die Aufgabe zugrunde, die die Wartung der Schaltkupplung zu vereinfachen und die Lebensdauer der Elemente einer Schaltkupplung für eine Baumaschine zu erhöhen. Dokument US5009118A zeigt eine Schaltkupplung mit einem antriebsseitigen Ende und einem abtriebsseitigen Ende, einer Abtriebswelle, wobei an dem antriebsseitigen Ende ein antriebsseitiges Lager an der Abtriebswelle angeordnet ist, wobei zur Schmierung verschiedener Lager eine Schmiermittelleitung vorgesehen ist, die vom antriebsseitigen Ende zumindest abschnittweise durch die Antriebswelle verläuft.

Zur Lösung dieser Aufgabe dienen die Merkmale des Anspruchs 1.

Die Erfindung sieht in vorteilhafter Weise vor, dass eine Schmiermittelleitung zur Schmierung des antriebsseitigen Lagers vorgesehen ist, die von dem abtriebsseitigen Ende zu dem antriebsseitigen Lager führt und zumindest abschnittsweise durch die Abtriebswelle verläuft.

Dies hat den Vorteil, dass das antriebsseitige Lager auch vom abtriebsseitigen Ende her geschmiert werden kann. Es ist besonders vorteilhaft, dass zuvor keine oder nur wenige Teile der Schaltkupplung oder anderer Elemente des Antriebsstrangs entfernt werden müssen. Daher kann das Lager in regelmäßigen Abständen geschmiert werden. Dies kann die Lebensdauer dieses Lagers erheblich erhöhen.

Erfindungsgemäß verläuft die Schmiermittelleitung zumindest teilweise durch die Abtriebswelle.

Die Schmiermittelleitung kann zumindest abschnittsweise konzentrisch in der Abtriebswelle verlaufen. Es kann dabei insbesondere vorgesehen sein, dass der in der Abtriebswelle verlaufende Abschnitt der Schmiermittelleitung konzentrisch in der Abtriebswelle verläuft.

Alternativ kann die Schmiermittelleitung zumindest abschnittsweise exzentrisch in der Abtriebswelle verlaufen.

Die Schaltkupplung ist eine hydraulische Schaltkupplung, wobei eine Hydraulikleitung zum Schalten der Schaltkupplung zumindest teilweise innerhalb der Abtriebswelle verläuft.

Die Hydraulikleitung kann zumindest abschnittsweise konzentrisch in der Abtriebswelle verlaufen. Es kann dabei insbesondere vorgesehen sein, dass der in der Abtriebswelle verlaufende Abschnitt der Hydraulikleitung konzentrisch in der Abtriebswelle verläuft.

Die Schmiermittelleitung kann zumindest teilweise in der Hydraulikleitung verlaufen.

Die Schmiermittelleitung kann wenigstens abschnittsweise konzentrisch zu der Hydraulikleitung verlaufen.

Die Schmiermittelleitung kann durch die gesamte Abtriebswelle verlaufen.

Die Schmierstoffleitung kann einen ersten Teil aufweisen, der innerhalb einer stabförmigen Einrichtung angeordnet ist, der wiederum in der Hydraulikleitung verläuft.

Die stabförmige Einrichtung kann zusätzliche Durchlässe für die Hydraulikflüssigkeit aufweisen.

Das abtriebsseitige Ende der Schmiermittelleitung kann durch ein Deckelelement abgeschlossen sein, wobei das Deckelelement im Wartungszustand beispielsweise zur Durchführung von Wartungsarbeiten von der Schaltkupplung abnehmbar sein kann und somit die Schmiermittelleitung mit einer Schmiermittelversorgung verbunden werden kann. Im Wartungszustand ist die Schaltkupplung vorzugsweise nicht in Betrieb.

Das Deckelelement kann als Drehdurchführung ausgestaltet sein und einen Durchlass für die Hydraulikleitung aufweisen, so dass im Betriebszustand der Schaltkupplung die Hydraulikleitung durch das Deckelelement mit einer Hydraulikversorgung verbunden ist.

Das abtriebsseitige Ende der Schmiermittelleitung kann alternativ durch eine doppelte Drehdurchführung abgeschlossen sein, wobei die doppelte Drehdurchführung zumindest einen Durchlass zu der Schmiermittelleitung und zumindest einen Durchlass zu der Hydraulikleitung aufweist.

Die Schmierung kann dann automatisch beispielsweise durch eine Zentralschmieranlage vorzugsweise nach einem vorgegebenen Zeitplan erfolgen.

Im Folgenden werden unter Bezugnahme auf die Zeichnungen Ausführungsbeispiele der Erfindung näher erläutert.

Es zeigen schematisch:
- Fig. 1: eine Baumaschine,
- Fig. 2: einen Antriebsstrang der Baumaschine,
- Fig. 3: eine Schaltkupplung des Antriebsstrangs,
- Fig. 4: ein stabförmiges Element der erfindungsgemäßen Schaltkupplung,
- Fig. 5: die Schaltkupplung gemäß Fig. 3 im Betriebszustand,
- Fig. 6: die Schaltkupplung gemäß Fig. 3 in einem Wartungszustand,
- Fig. 7: die Schaltkupplung bei Schmierung des antriebsseitigen Lagers,
- Fig. 8: eine alternative Schaltkupplung mit doppelter Drehdurchführung,
- Fig. 9: die Schaltkupplung gemäß Fig. 8 mit Flussrichtung des Schmiermittels,
- Fig. 10: die Schaltkupplung gemäß Fig. 8 mit Flussrichtung der Hydraulikfüssigkeit,

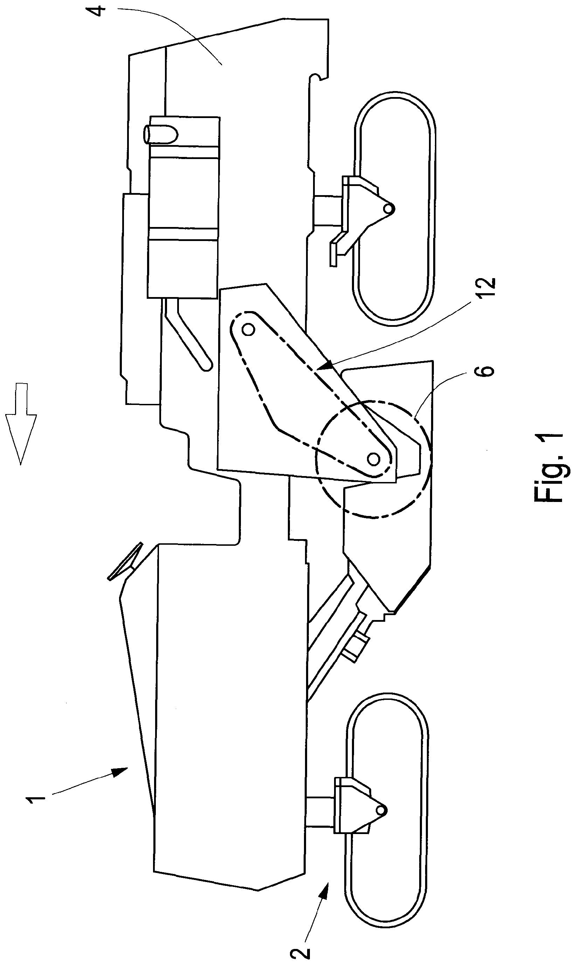

Fig. 1 zeigt eine Baumaschine 1 in Form einer Großfräse. Die Baumaschine 1 kann jedoch auch jegliche andere Baumaschine sein mit einem Antriebsstrang, in dem eine Schaltkupplung angeordnet ist. Die dargestellte Baumaschine 1 weist Fahrwerke 2 auf, die einen Maschinenrahmen 4 tragen. An dem Maschinenrahmen 4 ist eine Arbeitswalze 6 als Arbeitseinrichtung zum Bearbeiten eines Bodenbelags 3 gelagert. Die Arbeitswalze 6 kann zum Bearbeiten des Bodenbelags 3 nicht dargestellte Fräsmeißel an der Mantelfläche der Arbeitswalze 6 aufweisen.

Der Maschinenrahmen 4 kann über die Fahrwerke 2 höhenverstellbar sein. Die Fahrwerke können Räder oder Kettenlaufwerke sein. Die Baumaschine 1 kann ferner eine nicht gezeigte Fördereinrichtung zum Abtransport des Fräsguts aufweisen.

Der Antriebsstrang 8 treibt die Arbeitswalze 6 an. Der Antriebsstrang 8 weist zumindest eine Schaltkupplung 14 auf.

Die Baumaschine 1 kann eine Fräsmaschine, insbesondere eine Straßenfräsmaschine, ein Recycler oder Stabilisierer oder ein Surfaceminer sein.

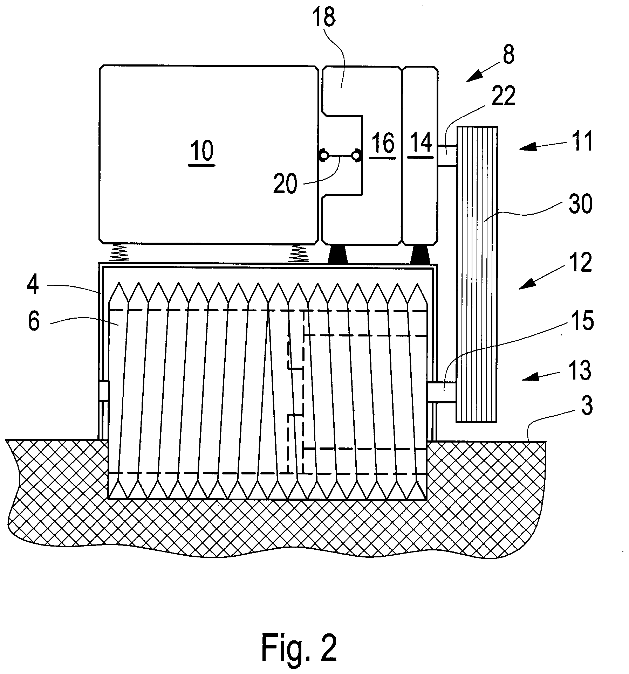

Fig. 2 zeigt schematisch einen Querschnitt durch eine Baumaschine 1 mit einer Arbeitswalze 6, die in einem Maschinenrahmen 4 gelagert ist. Alternativ kann die Arbeitswalze 6 in einem Walzengehäuse gelagert sein, das wiederum mit dem Maschinenrahmen 4 fest verbunden ist. Die Arbeitswalze 6 kann auch relativ zu dem Maschinenrahmen 4 beweglich insbesondere höhenverstellbar gelagert sein. Die Arbeitswalze 6 kann beispielsweise aus einer Fräswalze bestehen.

In Fig. 2 ist der Antriebsstrang 8 dargestellt. In Fig. 2 ist die Antriebseinheit 10 dargestellt. Diese kann vorzugsweise einen Verbrennungsmotor aufweisen. Der Verbrennungsmotor kann insbesondere ein Dieselmotor sein. Die Antriebseinheit 10 kann über eine gelenkige Kopplungseinrichtung, beispielsweise eine Elastomerkupplung 20 mit einem Pumpenverteilgetriebe 16 zum Antrieb von hydraulischen Aggregaten, z.B. Hydraulikpumpen 18 gekoppelt sein. Die Elastomerkupplung 20 kann auch an anderer Stelle innerhalb des Antriebstrangs 8 angeordnet sein.

Ferner weist der Antriebstrang 8 eine Schaltkupplung 14 auf, die im Antriebstrang 8 zwischen der Antriebseinheit 10 und der Arbeitswalze 6 angeordnet ist. Die Schaltkupplung 14 ist eine Einrichtung zum Schalten des Drehmoments. Zwischen der Schaltkupplung 14 und der Arbeitswalze 6 ist ein Zugmittelgetriebe 12 für den mechanischen Antrieb der Arbeitswalze 6 angeordnet. Das Zugmittelgetriebe 12 weist ein Antriebselement 11 auf, das mit einer Abtriebswelle 22 der Schaltkupplung 14 drehfest gekoppelt ist. Ferner weist das Zugmittelgetriebe 12 ein Abtriebselement 13 auf, das mit einer Antriebswelle 15 der Arbeitswalze 6 drehfest gekoppelt ist. Zwischen der Antriebswelle 15 und der Arbeitswalze 6 kann noch ein Getriebe insbesondere ein Planetengetriebe angeordnet sein.

Das Zugmittelgetriebe 12 ist vorzugsweise ein Riemenantrieb, wobei die Antriebs- und Abtriebselemente aus Riemenscheiben 11, 13 bestehen, über die wenigstens ein Antriebsriemen 30 umläuft. Alternativ kann das Zugmittelgetriebe 12 beispielsweise aus einem Kettenantrieb bestehen, wobei dann die Antriebs- und Abtriebselemente aus Ritzeln bestehen.

Die Antriebseinheit 10 bzw. das Pumpenverteilgetriebe 16 kann über die Schaltkupplung 14 mit der Riemenscheibe 11 gekoppelt sein.

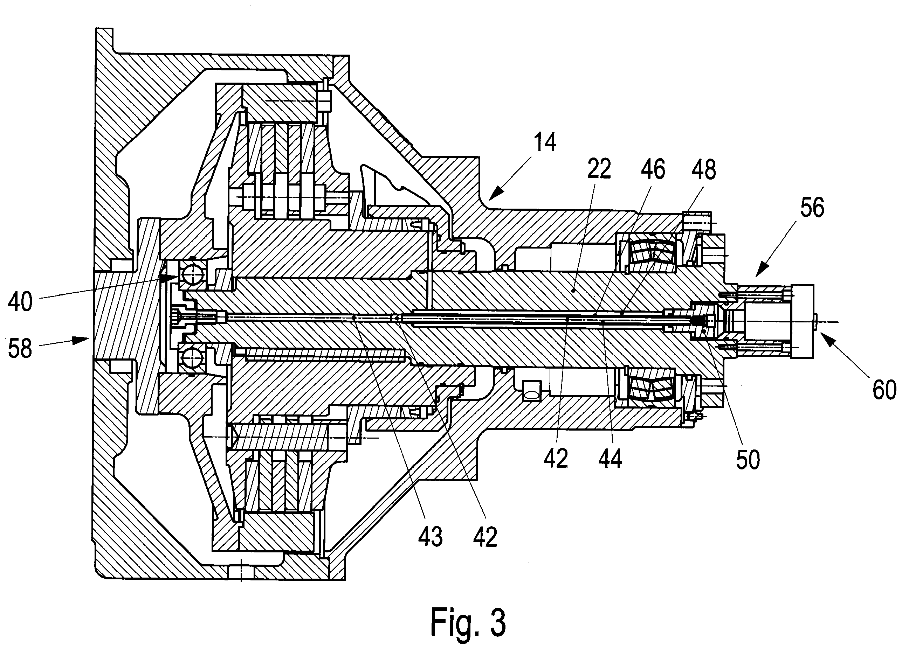

In Fig. 3 ist die Schaltkupplung 14 näher dargestellt. Die Schaltkupplung 14 ist vorzugsweise eine hydraulische Schaltkupplung. Die Schaltkupplung 14 weist ein antriebsseitiges Ende 58 und ein abtriebsseitiges Ende 60 auf. Ferner ist eine Abtriebswelle 22 vorgesehen, wobei an dem antriebsseitigen Ende ein antriebsseitiges Lager 40 für die Abtriebswelle 22 angeordnet ist.

Es ist eine Schmiermittelleitung 42 zur Schmierung des antriebsseitigen Lagers 40 vorgesehen, die von dem abtriebsseitigen Ende 60 zu dem antriebsseitigen Lager 40 führt und zumindest abschnittsweise durch die Abtriebswelle 22 verläuft.

Die Schmiermittelleitung verläuft, wie dargestellt, konzentrisch in der Abtriebswelle 22. Alternativ könnte die Schmiermittelleitung 42 jedoch auch exzentrisch zu der Abtriebswelle 22 verlaufen.

Die dargestellte hydraulische Schaltkupplung 14 weist ferner eine Hydraulikleitung 48 zum Schalten der Schaltkupplung 14 auf. Diese Hydraulikleitung 48 verläuft zumindest teilweise innerhalb der Abtriebswelle 22. Die Hydraulikleitung 48 verläuft dabei insbesondere konzentrisch in der Abtriebswelle 22. Die Schmiermittelleitung 42 verläuft zumindest teilweise in der Hydraulikleitung 48. Der erste Teil 46 der Schmiermittelleitung 42 verläuft in diesem Fall in der Hydraulikleitung 48. Dafür ist eine stabförmige Einrichtung 44 vorgesehen, die innerhalb der Hydraulikleitung 48 verläuft und in der der erste Teil 46 der Schmiermittelleitung 42 angeordnet ist.

Das abtriebsseitige Ende 60 der Schmiermittelleitung 42 ist durch ein Deckelelement 56 abgeschlossen. Das Deckelelement 56 ist in einem Wartungszustand abnehmbar, so dass in diesem Fall die Schmiermittelleitung 42 mit einer Schmiermittelversorgung verbunden werden kann.

Bei dem in Fig. 3 dargestellten Ausführungsbeispiel ist das Deckelelement 56 als Drehdurchführung ausgestaltet, wobei diese einen Durchlass für Hydraulikflüssigkeit für die Hydraulikleitung 48 aufweist.

In einem Betriebszustand, in dem das Deckelelement 56 die Schmiermittelleitung 42 abschließt, kann dann durch das Deckelelement die Hydraulikleitung 48 mit einer Hydraulikversorgung verbunden sein.

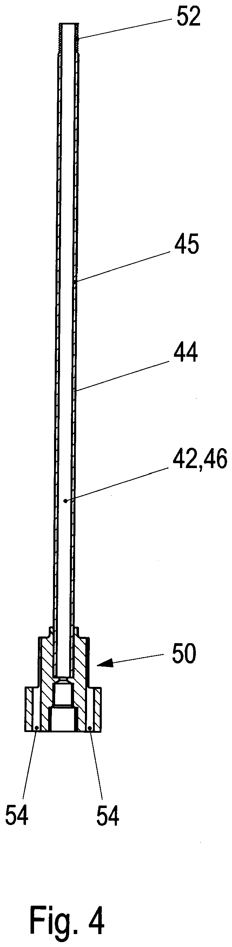

In Fig. 4 ist die stabförmige Einrichtung 44 näher dargestellt. Diese weist ein Kopfteil 50 auf, das an einem Ende der stabförmigen Einrichtung 44 angeordnet ist. An das Kopfteil 50 schließt sich ein stabförmiges Element 45 an. Durch das stabförmige Element 45 und das Kopfteil 50 verläuft die Schmiermittelleitung 42 bzw. der erste Teil 46 der Schmiermittelleitung. Ferner weist das Kopfteil 50 zusätzliche Durchlässe 54 für die Hydraulikflüssigkeit auf. An dem dem Kopfteil gegenüberliegenden Ende ist ein Gewinde 52 angeordnet, das in den zweiten Teil 43 der Schmiermittelleitung 42 eingeschraubt werden kann.

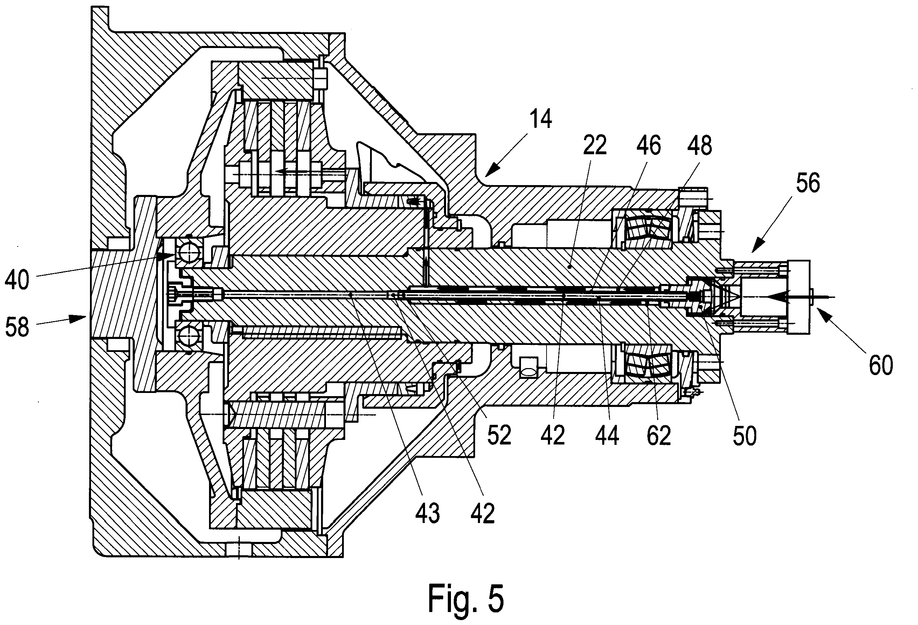

Fig. 5 zeigt die Schaltkupplung 14 im Betriebszustand. Dabei wird durch das Deckelelement 56, das im dargestellten Ausführungsbeispiel eine Drehdurchführung ist, während des Betriebs Hydraulikflüssigkeit durch die Drehdurchführung und durch das Kopfteil 50 der stabförmigen Einrichtung 44 in die Hydraulikleitung 48 geleitet. Mittels der Hydraulikflüssigkeit kann die hydraulische Schaltkupplung 14 geschaltet werden. Die Flussrichtung der Hydraulikflüssigkeit ist mit den Pfeilen 62 gekennzeichnet. Bei dem Übergang zwischen dem ersten Teil 46 der Schmiermittelleitung 42 und dem zweiten Teil 43 der Schmiermittelleitung 42 ist die Hydraulikleitung 48 durch die stabförmige Einrichtung 44, die an diesem Ende mit dem Gewinde 52 in dem zweiten Teil 43 eingeschraubt ist, verschlossen. Die Hydraulikleitung 48 und die Schmiermittelleitung 42 sind voneinander getrennt, so dass keine Hydraulikflüssigkeit in die Schmiermittelleitung 42 gelangen kann und kein Schmiermittel in die Hydraulikleitung 48 gelangen kann.

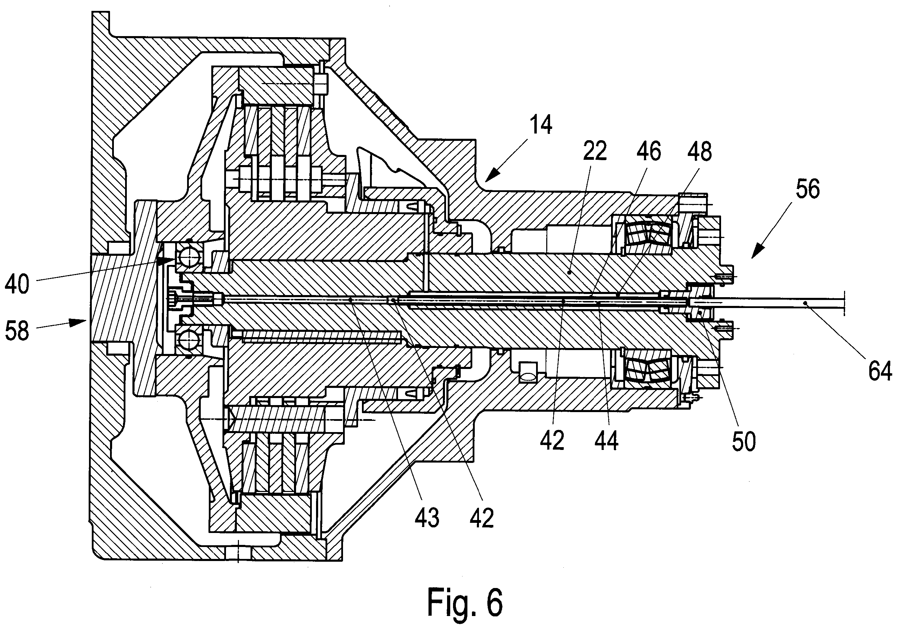

In Fig. 6 ist ein Wartungszustand der Schaltkupplung 14 dargestellt. In diesem Wartungszustand ist das Deckelelement 56 abgenommen. Die Schmiermittelleitung 42 kann in diesem Fall mit einer Schmiermittelversorgung 64 verbunden werden. In dem Wartungszustand muss die hydraulische Schaltkupplung 14 nicht mit Hydraulikflüssigkeit versorgt werden. Daher kann das Deckelelement 56 abgenommen werden.

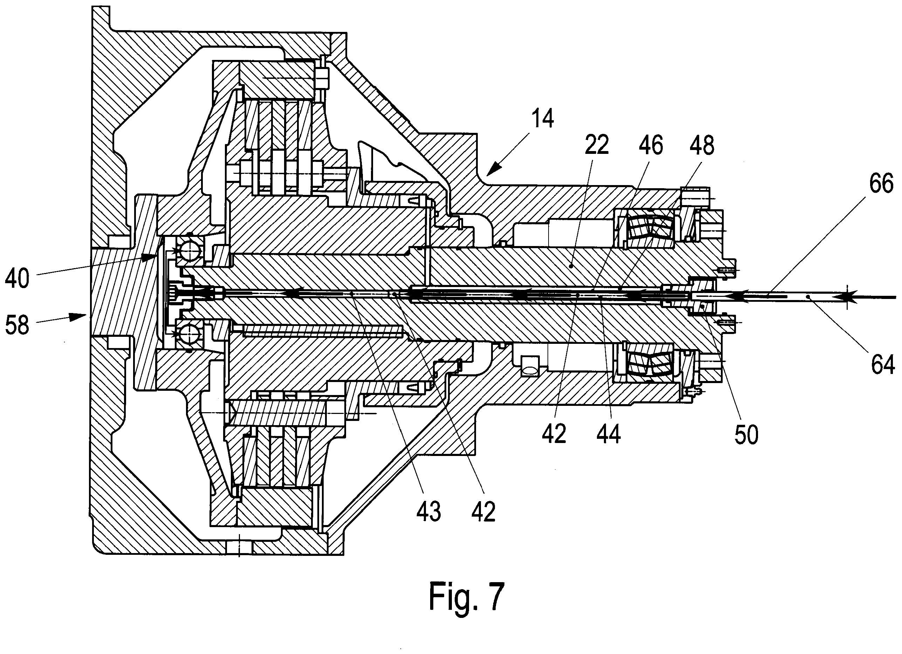

In Fig. 7 ist die Flussrichtung des Schmiermittels mit den Pfeilen 66 dargestellt. Das Schmiermittel kann zu dem antriebsseitigen Lager 40 geführt werden.

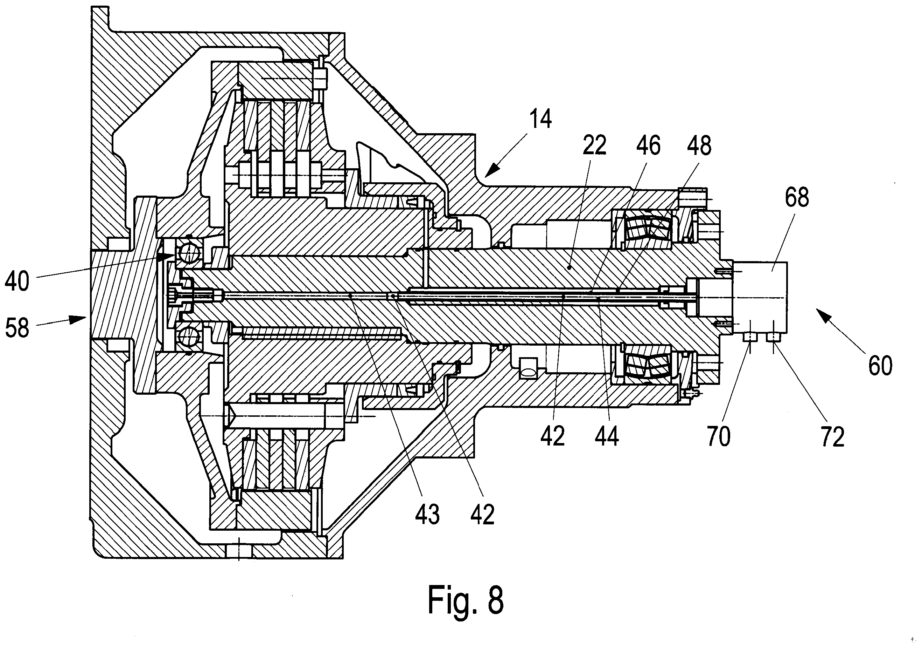

In Fig. 8 ist alternatives Ausführungsbeispiel dargestellt. Es ist dem Ausführungsbeispiel aus den vorherigen Fign. sehr ähnlich, jedoch mit dem Unterschied, dass anstelle des Deckelelementes 56 eine doppelte Drehdurchführung 68 angeordnet ist. Diese weist zumindest einen Durchlass 70 zu der Schmiermittelleitung 42 und zumindest einen Durchlass 72 zu der Hydraulikleitung 48 auf. Die doppelte Drehdurchführung 68 hat den Vorteil, dass das antriebsseitige Lager 40 auch während des Betriebs geschmiert werden kann. Es kann somit durch die doppelte Drehdurchführung sowohl Hydraulikflüssigkeit als auch Schmiermittel geführt werden, ohne dass die als Deckel fungierende doppelte Drehdurchführung 68 abgenommen werden muss. Auf diese Weise kann die Schmierung des antriebsseitigen Lagers automatisch nach einem vorgegebenen Zeitplan erfolgen ohne dass der Betrieb unterbrochen werden muss.

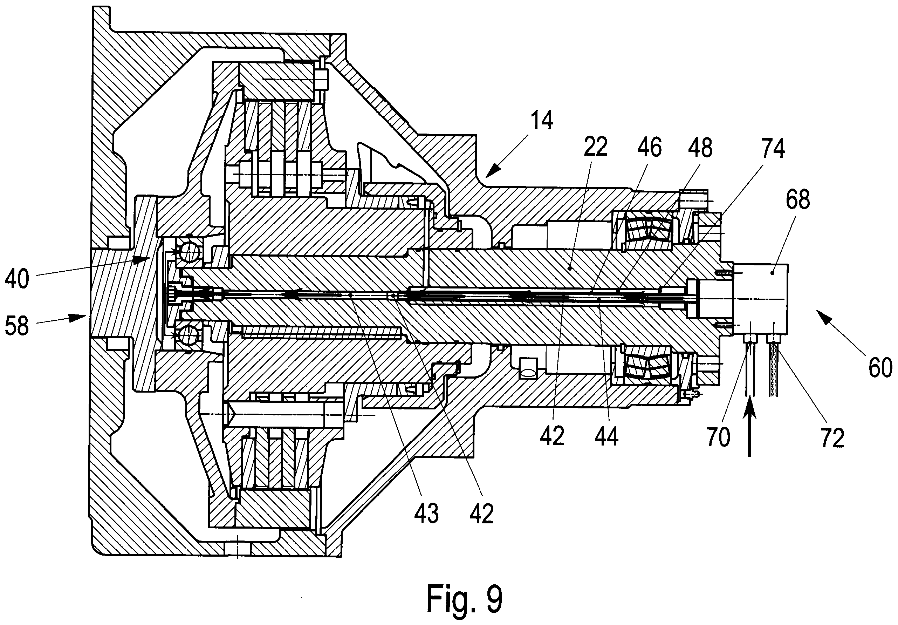

In Fig. 9 ist dargestellt, wie das Schmiermittel durch die doppelte Drehdurchführung zu dem antriebsseitigen Lager verläuft. Die Flussrichtung des Schmiermittels ist mit 74 gekennzeichnet.

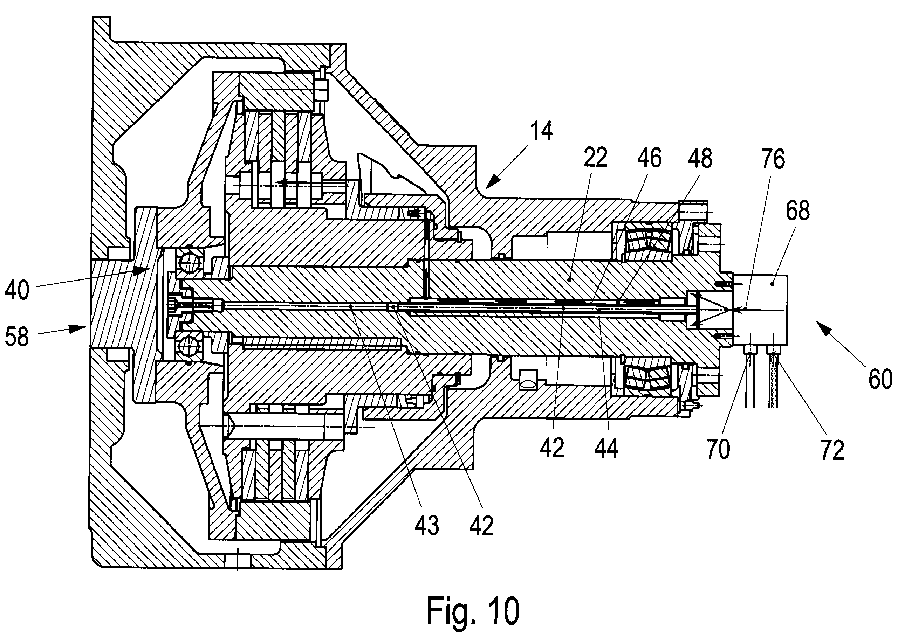

In Fig. 10 ist dargestellt, wie die Hydraulikflüssigkeit durch die doppelte Drehdurchführung 68 verläuft. Die Flussrichtung der Hydraulikflüssigkeit ist mit den Pfeilen 76 gekennzeichnet.

## Patentansprüche

1. Baumaschine (1) mit einem Antriebsstrang, in dem eine Schaltkupplung (14) angeordnet ist, wobei die Schaltkupplung (14) umfasst:
- ein antriebsseitiges Ende (58) und ein abtriebsseitiges Ende (60),
- eine Abtriebswelle (22), wobei an dem antriebsseitigen Ende (58) ein antriebsseitiges Lager (40) an der Abtriebswelle (22) angeordnet ist,
- wobei die Schaltkupplung (14) eine hydraulische Schaltkupplung ist, wobei eine Hydraulikleitung (48) zum Schalten der Schaltkupplung (14) zumindest teilweise innerhalb der Abtriebswelle (22) verläuft
**dadurch gekennzeichnet, dass** eine Schmiermittelleitung (42) zur Schmierung des antriebsseitigen Lagers (40) vorgesehen ist, die von dem abtriebsseitigen Ende (60) zu dem antriebsseitigen Lager (40) führt und zumindest abschnittsweise durch die Abtriebswelle (22) verläuft.

2. Baumaschine nach Anspruch 1, **dadurch gekennzeichnet, dass** die Schmiermittelleitung (42) zumindest abschnittsweise konzentrisch in der Abtriebswelle (22) verläuft.

3. Baumaschine nach Anspruch 1 oder 2, **dadurch gekennzeichnet, dass** die Schmiermittelleitung zumindest abschnittsweise exzentrisch in der Abtriebswelle (22) verläuft.

4. Baumaschine nach einem der Ansprüche 1 bis 3, **dadurch gekennzeichnet, dass** die Hydraulikleitung (48) zumindest abschnittsweise konzentrisch in der Abtriebswelle (22) verläuft.

5. Baumaschine nach einem der Ansprüche 1 bis 4, **dadurch gekennzeichnet, dass** die Schmiermittelleitung (42) zumindest teilweise in der Hydraulikleitung (48) verläuft.

6. Baumaschine nach einem der Ansprüche 1 bis 5, **dadurch gekennzeichnet, dass** die Schmiermittelleitung (42) zumindest abschnittsweise konzentrisch zu der Hydraulikleitung (48) verläuft.

7. Baumaschine nach einem der Ansprüche 1 bis 6, **dadurch gekennzeichnet, dass** Schmiermittelleitung (42) einen ersten Teil (46) aufweist, der innerhalb einer stabförmigen Einrichtung (44) angeordnet ist, der wiederum in der Hydraulikleitung (48) verläuft.

8. Baumaschine nach Anspruch 7, **dadurch gekennzeichnet, dass** die stabförmige Einrichtung (44) zusätzlich Durchlässe (54) für die Hydraulikflüssigkeit aufweist.

9. Baumaschine nach einem der Ansprüche 1 bis 8, **dadurch gekennzeichnet, dass** das abtriebsseitige Ende (60) der Schmiermittelleitung (42) durch ein Deckelelement (56) abgeschlossen ist, wobei das Deckelelement (56) in einem Wartungszustand der Schaltkupplung (14) abnehmbar ist und die Schmiermittelleitung (42) mit einer Schmiermittelversorgung (64) verbunden werden kann.

10. Baumaschine nach Anspruch 9, **dadurch gekennzeichnet, dass** das Deckelelement (56) als Drehdurchführung ausgestaltet ist und einen Durchlass zu der Hydraulikleitung (48) aufweist, so dass im Betriebszustand der Schaltkupplung (14) die Hydraulikleitung (48) durch das Deckelelement (56) mit einer Hydraulikversorgung verbunden ist.

11. Baumaschine nach einem der Ansprüche 1 bis 8, **dadurch gekennzeichnet, dass** das abtriebsseitige Ende (60) der Schmiermittelleitung durch eine doppelte Drehdurchführung (68) abgeschlossen ist, wobei die doppelte Drehdurchführung (68) zumindest einen Durchlass zu der Schmiermittelleitung (42) und zumindest einen Durchlass zu der Hydraulikleitung (48) aufweist.

12. Baumaschine nach Anspruch 11, **dadurch gekennzeichnet, dass** die Schmierung automatisch nach einem vorgegebenen Zeitplan erfolgt.

## Claims

1. A construction machine (1) comprising a drive train in which a clutch (14) is arranged, the clutch (14) comprising
- a drive-side end (58) and a driven-side end (60),
- a driven shaft (22), wherein, at the drive-side end (58), a drive-side bearing (40) is arranged at the driven shaft (22),
- wherein the clutch (14) is a hydraulic clutch, wherein a hydraulic line (48) for switching the clutch (14) extends, at least partially, inside the driven shaft (22)
**characterized in that**
a lubricant line (42) for lubrication of the drive-side bearing (40) is specified which leads from the driven-side end (60) to the drive-side bearing (40) and extends, at least sectionally, through the driven shaft (22).

2. The construction machine in accordance with claim 1, **characterized in that** the lubricant line (42) extends, at least sectionally, concentrically inside the driven shaft (22).

3. The construction machine in accordance with claim 1 or 2, **characterized in that** the lubricant line extends, at least sectionally, eccentrically inside the driven shaft (22).

4. The construction machine in accordance with one of the claims 1 to 3, **characterized in that** the hydraulic line (48) extends, at least sectionally, concentrically inside the driven shaft (22).

5. The construction machine in accordance with one of the claims 1 to 4, **characterized in that** the lubricant line (42) extends, at least partially, inside the hydraulic line (48).

6. The construction machine in accordance with one of the claims 1 to 5, **characterized in that** the lubricant line (42) extends, at least sectionally, concentrically to the hydraulic line (48).

7. The construction machine in accordance with one of the claims 1 to 6, **characterized in that** the lubricant line (42) comprises a first section (46) which is arranged inside a rod-shaped device (44) which in turn extends inside the hydraulic line (48).

8. The construction machine in accordance with claim 7, **characterized in that** the rod-shaped device (44) additionally features openings (54) for the hydraulic fluid.

9. The construction machine in accordance with one of the claims 1 to 8, **characterized in that** the driven-side end (60) of the lubricant line (42) is closed by means of a cover element (56), wherein the cover element (56) is removable in a maintenance state of the clutch (14), and the lubricant line (42) can be connected to a lubricant supply (64).

10. The construction machine in accordance with claim 9, **characterized in that** the cover element (56) is designed as a rotary feed-through and features an opening to the hydraulic line (48) so that, in the operating state of the clutch (14), the hydraulic line (48) is connected to a hydraulic supply by means of the cover element (56).

11. The construction machine in accordance with one of the claims 1 to 8, **characterized in that** the driven-side end (60) of the lubricant line is closed by means of a dual rotary feed-through (68), wherein the dual rotary feed-through (68) comprises, as a minimum, one opening to the lubricant line (42) and, as a minimum, one opening to the hydraulic line (48).

12. The construction machine in accordance with claim 11, **characterized in that** lubrication is effected automatically in accordance with a predetermined time schedule.

## Revendications

1. Engin de chantier (1), avec une chaîne cinématique dans laquelle est disposé un embrayage (14), l'embrayage (14) comprenant :
- une extrémité (58) côté entraînement et une extrémité (60) côté sortie,
- un arbre de sortie (22), un palier (40) côté entraînement étant disposé sur l'arbre de sortie (22) à l'extrémité (58) côté entraînement,
- l'embrayage (14) étant un embrayage hydraulique, une conduite hydraulique (48) pour l'engagement de l'embrayage (14) étant située au moins partiellement à l'intérieur de l'arbre de sortie (22),
**caractérisé en ce**
**qu'**il est prévu une conduite de lubrifiant (42) destinée à la lubrification du palier (40) côté entraînement, conduite qui conduit de l'extrémité (60) côté sortie vers le palier (40) côté entraînement et traverse au moins par tronçons l'arbre de sortie (22).

2. Engin de chantier selon la revendication 1, **caractérisé en ce que** la conduite de lubrifiant (42) est située au moins par tronçons de façon concentrique dans l'arbre de sortie (22).

3. Engin de chantier selon la revendication 1 ou 2, **caractérisé en ce que** la conduite de lubrifiant est située au moins par tronçons de façon excentrée dans l'arbre de sortie (22).

4. Engin de chantier selon l'une des revendications 1 à 3, **caractérisé en ce que** la conduite hydraulique (48) est située au moins par tronçons de façon concentrique dans l'arbre de sortie (22).

5. Engin de chantier selon l'une des revendications 1 à 4, **caractérisé en ce que** la conduite de lubrifiant (42) est située au moins partiellement dans la conduite hydraulique (48).

6. Engin de chantier selon l'une des revendications 1 à 5, **caractérisé en ce que** la conduite de lubrifiant (42) est située au moins par tronçons de façon concentrique rapport à la conduite hydraulique (48).

7. Engin de chantier selon l'une des revendications 1 à 6, **caractérisé en ce que** la conduite de lubrifiant (42) présente une première partie (46) qui est disposée à l'intérieur d'un dispositif (44) en forme de barre qui est quant à lui situé dans la conduite hydraulique (48).

8. Engin de chantier selon la revendication 7, **caractérisé en ce que** le dispositif (44) en forme de barre présente en plus des traversées (54) pour le liquide hydraulique.

9. Engin de chantier selon l'une des revendications 1 à 8, **caractérisé en ce que** l'extrémité (60) côté sortie de la conduite de lubrifiant (42) est terminée par un élément de couverture (56), l'élément de couverture (56) pouvant être enlevé dans un état de maintenance de l'embrayage (14), et la conduite de lubrifiant (42) pouvant être raccordée à une unité d'alimentation en lubrifiant (64).

10. Engin de chantier selon la revendication 9, **caractérisé en ce que** l'élément de couverture (56) est constitué en tant que passage tournant et présente une traversée vers la conduite hydraulique (48) de sorte que, dans l'état de fonctionnement de l'embrayage (14), la conduite hydraulique (48) est raccordée par l'élément de couverture (56) à une alimentation hydraulique.

11. Engin de chantier selon l'une des revendications 1 à 8, **caractérisé en ce que** l'extrémité (60) côté sortie de la conduite de lubrifiant est terminée par un double passage tournant (68), le double passage tournant (68) présentant au moins une traversée vers la conduite de lubrifiant (42) et au moins une traversée vers la conduite hydraulique (48).

12. Engin de chantier selon la revendication 11, **caractérisé en ce que** la lubrification s'effectue automatiquement selon un horaire prédéfini.
